Europäisches Patentamt

European Patent Office

Office européen des brevets

(11) Publication number: **0 409 349 A1**

## EUROPEAN PATENT APPLICATION

(21) Application number: 90201950.4

(22) Date of filing: 18.07.90

(51) Int. Cl.⁵: **G01F 23/72**

(30) Priority: 19.07.89 NL 8901867

(43) Date of publication of application:
**23.01.91 Bulletin 91/04**

(84) Designated Contracting States:
**DE FR GB NL**

(71) Applicant: **SARA LEE/DE N.V.**
**Keulsekade 143**
**NL-3522 AA Utrecht(NL)**

(72) Inventor: **Müller, Dietrich**
**Lohstrasse 99**
**D-2406 Stockelsdorf(DE)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

(54) **Apparatus for controlling the level in a beverage dispensing system.**

(57) The invention relates to an apparatus for controlling the level of a beverage dispensing system for fluid. According to the invention a float is used which is arranged in an outlet pipe for the fluid.

FIG. 1

EP 0 409 349 A1

## APPARATUS FOR CONTROLLING THE LEVEL IN A BEVERAGE DISPENSING SYSTEM

The invention relates to an apparatus for controlling the level of a beverage dispensing system for fluids. In such an apparatus known from European patent specification 067466 the empty status is detected by means of a photoelectric circuit breaker. This circuit breaker, however, can only be used here because it concerns the dispensing of coffee extract, that is, a light absorbing fluid.

The invention aims to provide an apparatus for controlling the level in a beverage dispensing system, which operates independently of the absorption coefficient of the fluid to be dispensed.

To this end the apparatus according to the invention is characterized by a float disposed in an outlet pipe for the fluid.

The float may be of opaque material and the controlling apparatus may be formed by a source of light and a photoelectric cell cooperating with it.

However, it is also possible to use a float which comprises ferromagnetic material, the position of the float being determined by means of a coil mounted around the outlet pipe.

It is further possible for the float to contain ferro-magnetic material and for the position of the float to be determined by means of a proximity switch.

Still another possibility concerns the float being provided with a permanent magnet whose position is determined by means of a magnetic field sensor.

In further elaboration of the invention the float may be arranged upstream of the dispensing part, so that the empty status is timely detected and a new container with fluid to be dispensed can be mounted.

For the sake of completeness reference is further made to German patent specification 3131650. It is true that this publication does not describe an apparatus for level controlling, but one embodiment based on this German patent specification and reduced to practice does comprise such a beverage controlling apparatus. However, it is of a design similar to that described hereinabove with reference to European patent specification 67466, that is, it operates exclusively when fluids with a particular absorption coefficient are processed.

Combining the present invention with the apparatus known from DE-C-3,131,650 has the advantage that despite the pulsating dosing of the liquid the float will move slowly and not follow the pulsating effect.

Further, US patent specification 4,014,010 discloses a dispensing system with a flexible tube (column 1, lines 37-41 and column 2, line 50), in which an opaque float ball can be adjusted to particular control positions by applying pressure to the flexible tube (see column 1, line 21 and column 2, lines 64-66). In this known apparatus the aim is to monitor the positions adjusted as desired. That position will be detected.

Further, French patent specification 1,334,489 describes a system in which detection is effected by means of a lever system operated by a float, the lever system acting on two micro switches. This means that scanning is not free of contact.

Further, German patent specification 1,215,319 discloses a controlling system comprising a plurality of pairs of electrodes arranged above each other in a level measuring tube, so that depending on the pair of electrodes chosen a particular control level can be detected when the fluid bridges the electrodes chosen and thus closes an electric circuit.

In summary it may be said that none of the last four publications mentioned describes a construction in which a float is used which is arranged in the outlet pipe for the fluid.

To clarify the invention one embodiment of an apparatus for controlling the level of a beverage dispensing system for fluids will now be described, with reference to the accompanying drawings, in which:

Fig. 1 shows a perspective, exploded view of the apparatus according to the invention;

Figs. 1a and 1b show alternative embodiments of the apparatus according to Fig. 1;

Fig. 2 shows a sectional view of the float used in the apparatus according to Fig. 1;

Fig. 3 shows a side view of the apparatus according to Fig. 2;

Fig. 4 shows a cross-sectional view of the retaining ring used in the apparatus according to Fig. 1; and

Fig. 5 shows a left-hand side view of the apparatus according to Fig. 4.

According to the drawings, an apparatus for controlling the level of a dispensing system for a fluid or a viscous concentrate comprises a fitment 1 which is connected in known manner with a flexible container for viscous fluid. For further details reference is made to European patent specification 0,067,466, 49,505 and 46,754.

The apparatus further comprises in known manner a tubular dispensing part 2, on which a stop collar 3 is mounted. Mounted inside of the dispensing part 2 is a dispenser, not shown.

Mounted upstream of the dispenser is a float 4, as well as a clamp ring 5 used to lock the float 4 in the dispensing part 2.

Further the apparatus comprises a support ring 6 for supporting an edge of the fitment.

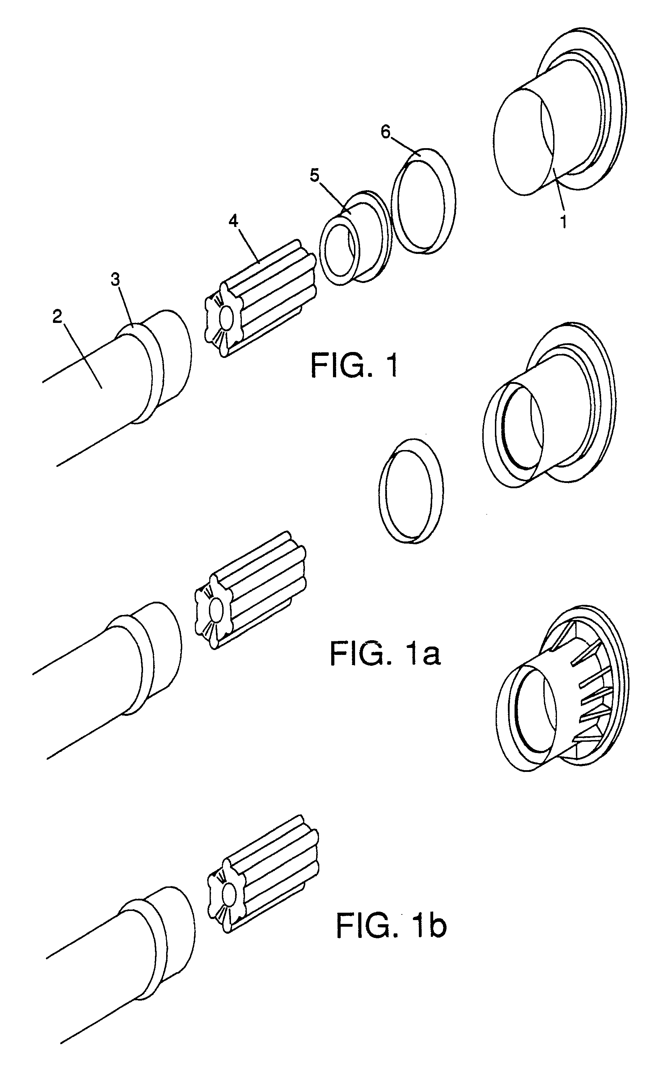

In the alternative embodiment shown in Fig. 1a the clamp ring is integrated into the fitment, which makes it easier to assemble the apparatus.

In the second alternative shown in Fig. 1b still further integration has taken place, so that the number of parts in comparison with the construction according to the prior art essentially remains the same, since the loose clamp ring according to the prior art is fixedly integrated into the fitment, with only the float 4 remaining as a loose, separate part.

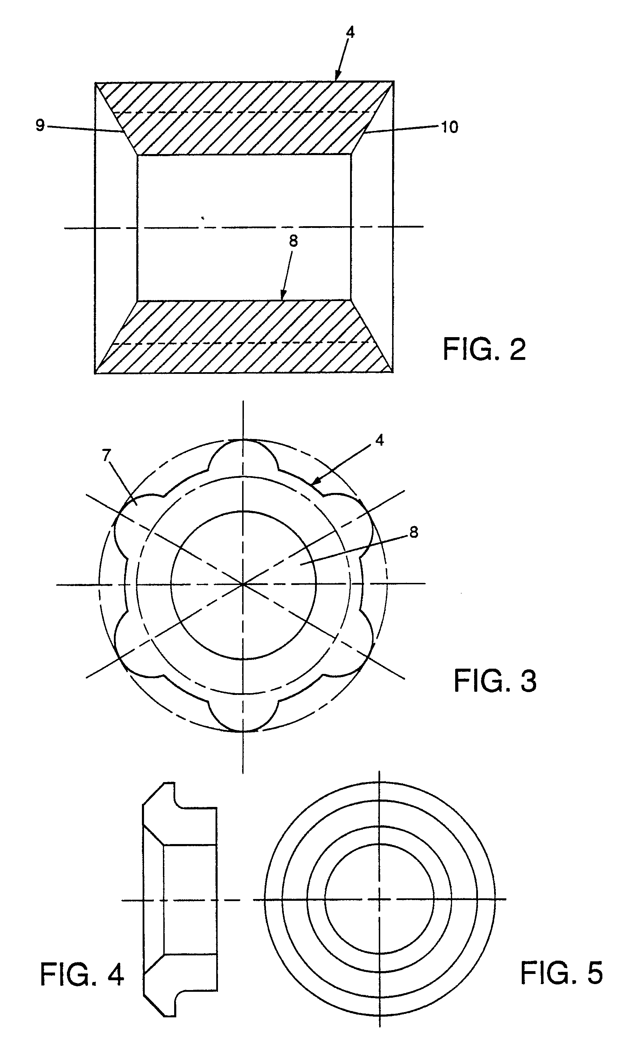

Figs. 2 and 3 show the construction of the float in more detail than Fig. 1. They show that the float has external ribs which are rounded off externally. This ensures a minimum surface of contact with the inner wall of the dispensing part 2, which renders the chances of wedging very small.

Furthermore, a central passage 8 is provided in the float, and the top and bottom surfaces 9, 10 of the float are tapered, ensuring rapid and effective passage of the fluid to be dispensed.

## Claims

1. Apparatus for controlling the level of a beverage dispensing system for fluid, characterized by a float disposed in an outlet pipe for the fluid.

2. Apparatus according to claim 1, characterized in that a float of opaque material is used and the controlling apparatus is formed by a source of light and a photoelectric cell cooperating therewith.

3. Apparatus according to claim 1, characterized in that the float contains ferromagnetic material and the position of the float is determined by means of a coil arranged around the outlet pipe.

4. Apparatus according to claim 1, characterized in that the float contains ferromagnetic material and the position of the float is determined by means of a proximity switch.

5. Apparatus according to claim 1, characterized in that the float is provided with a permanent magnet whose position is determined by means of a magnetic field sensor.

6. Apparatus according to one or more of the preceding claims, characterized in that the float is disposed upstream of the dispensing part.

7. Apparatus according to one or more of the preceding claims, characterized in that the float has external ribs which are rounded off externally.

8. Apparatus according to one or more of the preceding claims, characterized in that the top surface and the bottom surface of the float are of tapered configuration.

9. Apparatus according to one or more of the preceding claims, characterized in that the fluid is dosed pulsatingly.

**FIG. 1**

**FIG. 1a**

**FIG. 1b**

**FIG. 2**

**FIG. 3**

**FIG. 4**

**FIG. 5**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4014010 (JINOTTI) <br> * column 1, line 37 - column 2, line 24; figures * | 1, 2, 6 | G01F23/72 |
| Y | | 3, 4, 5 | |
| Y | GB-A-1414308 (PLESSEY) <br> * page 1, lines 47 - 56; figure 1 * | 3 | |
| Y | DE-A-2241082 (SIEMENS) <br> * page 5, paragraph 3 - page 6, paragraph 2; figure 1 * | 4 | |
| Y | US-A-3114478 (HILKEMEIER) <br> * column 2, line 69 - column 3, line 16; figure 3 * | 5 | |
| A | GB-A-995252 (HALBERGERHUTTE) <br> * page 2, lines 51 - 80; figures * | 2 | |
| A | DE-B-1139659 (VDO) <br> * column 3, lines 27 - 32; figures 1, 2 * | 7 | TECHNICAL FIELDS SEARCHED (Int. Cl.5 ) |
| A | US-A-2233235 (WITTHAUS) <br> * page 1, right-hand column, lines 13 - 40; figures 1, 3, 4 * | 7 | G01F <br> ^47J |
| X | DE-B-1215319 (MASCHINENFABRIK BREMEN) <br> * column 4, lines 18 - 20; figure 1 * | 1 | |
| X | FR-A-1334489 (SCHWINN) <br> * page 2, left-hand column, last paragraph - page 2, right-hand column, paragraph 1; figures * | 1 | |
| D,A | DE-A-3131650 (DAGMA) <br> * page 18, paragraph 1; figures 1, 2 * | 9 | |

The present search report has been drawn up for all claims

| Place of search | Date of completion of the search | Examiner |
|---|---|---|
| THE HAGUE | 16 OCTOBER 1990 | HEINSIUS R. |